(19) Europäisches Patentamt

European Patent Office

Office européen des brevets

(11) Veröffentlichungsnummer: **0 194 991**
**A2**

(12) **EUROPÄISCHE PATENTANMELDUNG**

(21) Anmeldenummer: 86890023.4

(22) Anmeldetag: **07.02.86**

(51) Int. Cl.⁴: **A01B 33/02** , A01B 33/16

(30) Priorität: 08.02.85 AT 374/85

(43) Veröffentlichungstag der Anmeldung:
**17.09.86 Patentblatt 86/38**

(84) Benannte Vertragsstaaten:
**CH DE FR IT LI**

(71) Anmelder: **Bombardier-Rotax-Wien Produktions- und Vertriebsgesellschaft m.b.H.**
**Donaufelder Strasse 73-79**
**A-1210 Wien(AT)**

(72) Erfinder: **Ranner, Dietrich, Dipl.-Ing.**
**Schwaighofen-Egg**
**A-5301 Eugendorf Salzburg(AT)**

(74) Vertreter: **Krause, Ernst, Dipl.-Ing. et al**
**Krause, Ernst, Dipl.-Ing. Casati, Wilhelm, Dipl.-Ing**
**P.O. Box 234 Amerlingstrasse 8**
**A-1061 Wien VI(AT)**

(54) **Bodenbearbeitungsgerät.**

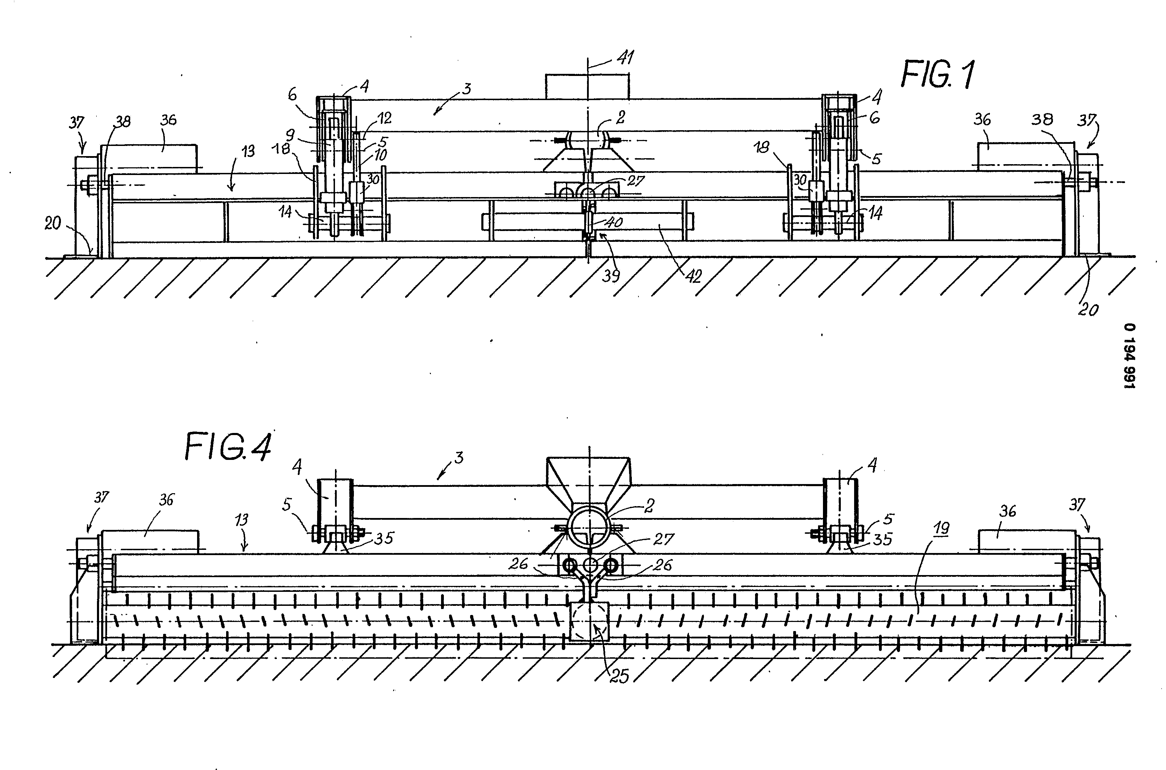

㊵ Die Erfindung betrifft ein Bodenbearbeitungsgerät, das für landwirtschaftliche Böden eingesetzt werden kann und als Bodenlockerungsvorrichtung eine Fräse aufweist, der in Bewegungsrichtung des Bodenbearbeitungsgerätes ein Glättbrett nachgeschaltet ist. Zur Verbesserung der Bodenanpassung, insbes. bei breiten Bodenbearbeitungsgeräten, sind sowohl das Glättbrett als auch die umlaufende Bodenbearbeitungsvorrichtung ungefähr mittig unterteilt. Die Abschnitte des Bodenbearbeitungsgerätes und des Glättbrettes sind dabei gelenkig miteinander verbunden. -Fig. 1

FIG. 1

EP 0 194 991 A2

## Bodenbearbeitungsgerät

Die Erfindung betrifft ein Bodenbearbeitungsgerät, mit einer um eine im wesentlichen horizontale Achse umlaufenden Bodenlockerungsvorrichtung, z.B. Fräse, und mit einem Glättbrett.

Geräte dieser Art eignen sich hervorragend zur Bearbeitung landwirtschaftlicher Böden, wobei die Bodenlockerungsvorrichtung, die bevorzugt als umlaufendes Werkzeug, z.B. als Fräse, ausgebildet ist, den Boden vor allem im Oberflächenbereich auflockert, wobei dann das Glättbrett für eine Einebnung des Bodens sorgt und den Boden z.B. für ein nachträgliches Säen vorbereitet. Ist eine pendelnde Verbindung zwischen dem Kupplungsbalken und dem Halter vorhanden, so kann sich das Gerät durch Pendeln um die Längsachse des Kupplungsbalkens dem Boden besonders gut anpassen, wobei auch die Höhenlage des Bodenbearbeitungsgerätes bezüglich des Zugfahrzeuges regulierbar ist, weil der Kupplungsbalken mit dem Zugfahrzeug, das beispielsweise als Traktor ausgebildet sein kann, auf-und abschwenkbar verbindbar ist.

Mit dem Gerät ist es auch möglich, nur Einebnungsarbeiten auszuführen, dies mittels des Glättbrettes bei hochgeschwenkter Bodenlockerungsvorrichtung.

Aufgabe der Erfindung ist es, ein Gerät der eingangs erwähnten Art so weiterzubilden, daß auch hinsichtlich ihrer Oberflächenform problematische Böden mit der Bodenlockerungsvorrichtung und/oder dem Glättbrett einwandfrei bearbeitet werden können.

Zu diesem Zweck ist gemäß der Erfindung bei einem Bodenbearbeitungsgerät der eingangs erwähnten Art vorgesehen, daß sowohl die umlaufende Bodenlockerungsvorrichtung als auch das Glättbrett ungefähr mittig unterteilt sind, und daß die beiden Abschnitte der Bodenlockerungsvorrichtung mittels eines Gelenkes, vorzugsweise eines Kugelgelenkes, miteinander verbunden sind und daß auch die Abschnitte des Glättbrettes mittels eines Gelenkes, das bevorzugt als Scharniergelenk mit in der Mittenlängsebene gelegener Achse ausgebildet ist, miteinander in Verbindung stehen. Durch die erfindungsgemäß vorgesehene Unterteilung und Verbindung der Teilstücke ist eine günstige Anpassung der Bodenlockerungsvorrichtung und und des Glättbrettes an die jeweilige Bodengestalt möglich, wobei eine große Arbeitsbreite des Gerätes beibehalten werden kann, wodurch auch breite Felder in wenigen Durchgängen bearbeitet werden können.

In weiterer Ausgestaltung der Erfindung ist vorgesehen, daß zur Achsialführung der Welle der Bodenlockerungsvorrichtung das die beiden Abschnitte der Bodenlockerungsvorrichtung verbindende Gelenk über Federn an einem quer zur Fahrtrichtung des Bodenbearbeitungsgerätes angeordneten Balken abgestützt ist. Durch diese Ausbildung wird ein Wandern der Welle der Bodenbearbeitungsvorrichtung in Richtung ihrer Achse besonders vorteilhaft und mit einfachen Mitteln verhindert.

Der Anpaßbarkeit an die Bodengestalt ist es weiters förderlich, wenn gemäß einer weiteren Ausführungsform des erfindungsgemäßen Bodenbearbeitungsgerätes der Balken nach Art eines Gerberträgers mit ungefähr mittig angeordnetem Gelenk ausgebildet ist, und wenn jeder Balkenabschnitt, bevorzugt mittig, über eine bevorzugt als Kugelgelenk ausgebildete Pendellagerung an einem quer zur Fahrtrichtung des Gerätes angeordneten Haltebalken angelenkt ist.

Besonders vorteilhaft ist eine Ausgestaltung des Bodenbearbeitungsgerätes, bei der der Balken an jedem seiner freien Enden ein Antriebsaggregat (Getriebe) für die umlaufende Bodenlockerungsvorrichtung trägt, wobei gegebenenfalls das Antriebsaggregat (Getriebe) in Längsrichtung des Balkens verschiebbar mit dem Balken verbunden ist und die Welle der Bodenlockerungsvorrichtung drehschlüssig, jedoch fest (axial unverschieblich) mit dem Antriebsaggregat in Verbindung steht. Da der Balken und die Bodenlockerungsvorrichtung bei einer Anpassung an wechselnde Bodenkonfigurationen um unterschiedliche Drehpunkte schwenken, wird durch die spezielle Lagerung des Antriebsaggregates am Balken und an der Bodenlockerungsvorrichtung eine Kompensationsbewegung des Antriebsaggregates gegenüber dem Balken sichergestellt. Es könnte auch das Antriebsaggregat fest mit dem Balken verbunden sein, in welchem Falle dann die Verbindung mit der Antriebswelle der Bodenlockerungsvorrichtung axial verschieblich (und drehschlüssig) ausgebildet sein müßte.

Bevorzugt sind in Weiterbildung des Erfindungsgegenstandes die Federn, welche das die beiden Abschnitte der Bodenlockerungsvorrichtung verbindende Gelenk mit dem Balken verbinden, als gekrümmte Blattfedern ausgebildet, die ausgehend vom Gelenk symmetrisch zur Längsmittenebene des Bodenbearbeitungsgerätes angeordnet sind. Hiedurch wird sichergestellt, daß vie Verbindungslinie eines zwischen dem Zentrum des Kugelgelenks und der Schwenkachse der Balkenteile stets die Winkelsymmetrale der Balkenteile bildet.

Der Anpassung an die jeweilige Bodenkonfiguration ist es weiters förderlich, wenn in Weiterbildung der Erfindung jeder Abschnitt des Glättbrettes im Abstand von dem die Glättbrettabschnitte verbindenden Gelenk, bevorzugt in der Mitte des jeweiligen Glättbrettabschnittes, an einem Abschnitt des Balkens pendelnd angelenkt ist.

Die Erfindung wird nachstehend anhand eines in der Zeichnung beispielsweise dargestellten Bodenbearbeitungsgerätes näher erläutert.

Es zeigen

Fig.1 eine Ansicht des erfindungsgemäßen Bodenbearbeitungsgerätes von hinten,

Fig.2 einen Schnitt entlang der Linie II-II, wobei auch die Verbindung des Bodenbearbeitungsgerätes mit einem Zugfahrzeug ersichtlich ist,

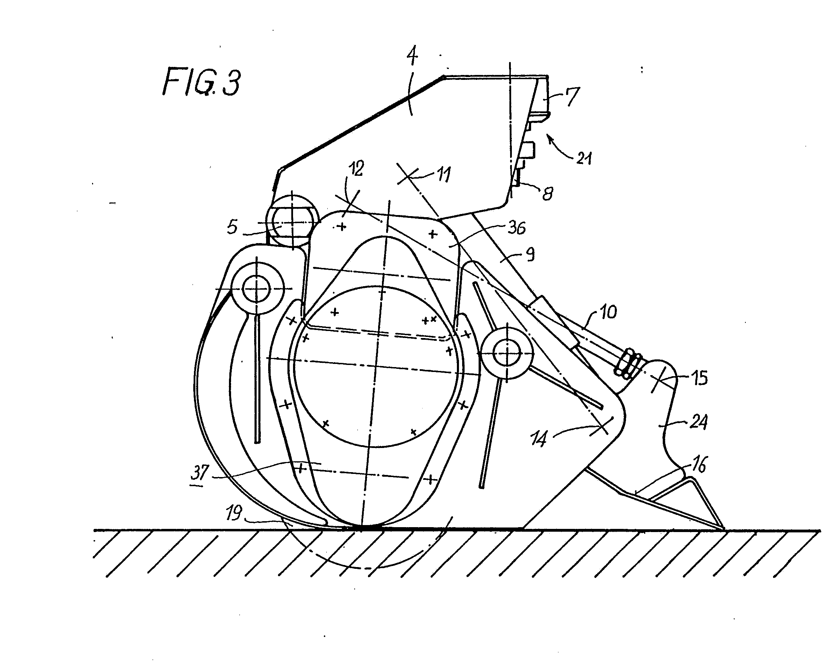

Fig.3 eine Ansicht des Bodenbearbeitungsgerätes in Richtung des Pfeiles III in Fig.1,

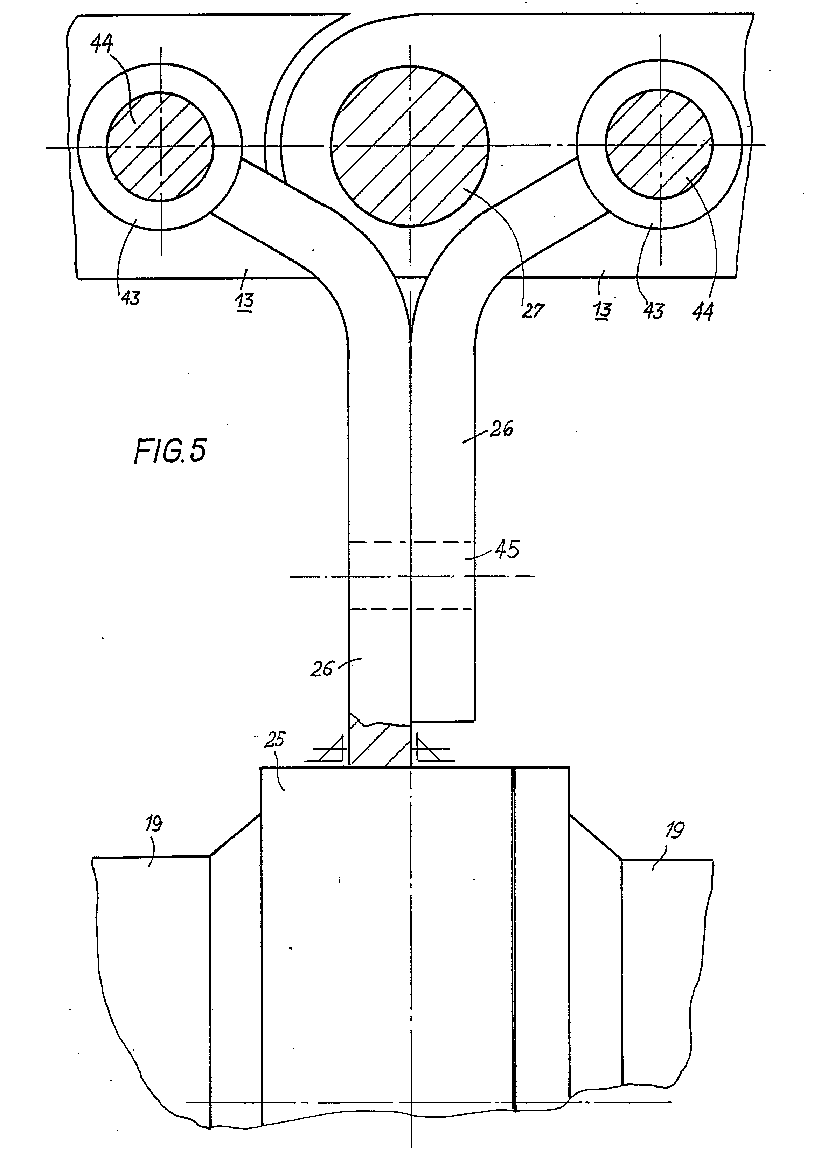

Fig.4 eine Ansicht des Bodenbearbeitungsgerätes in Richtung des Pfeiles IV in Fig.2,

Fig.5 ein Detail aus Fig.4, und Fig.6 ein Detail aus Fig.1 in gegenüber Fig.1 vergrößertem Maßstab.

In der Zeichnung ist mit 17 ein Zugfahrzeug für das erfindungsgemäße Bodenbearbeitungsgerät bezeichnet. Das Bodenbearbeitungsgerät ist über einen Kupplungsbalken 1 - schwenkbar an das Zugfahrzeug 17 anschließbar, wobei zur Änderung der Lage des Kupplungsbalkens 1 und damit auch des erfindungsgemäßen Bodenbearbeitungsgerätes ein Kolben/Zylinderaggregat 22 vorgesehen ist. Der Kolben bzw. die Kolbenstange dieses Kolben/Zylinderaggregates greift hiebei an einer Lasche 32 des Kupplungsbalkens 1 an. Der Zylinder des Kolben/Zylinderaggregates 22 ist dabei schwenkbar am Rahmen des Zugfahrzeuges gelagert.

Mit dem Kupplungsbalken 1 ist über ein elastisches Gelenk 2 ein Haltebalken 3 verbunden, mit dem die Bodenlockerungsvorrichtung 19 und das Glättbrett 16 in Verbindung stehen. Das elastische Ge lenk 2 ermöglicht eine Pendelbewegung des Haltebalkens 3 um die Längsache 33 des Kupplungsbalkens 1, wodurch sich die Bodenlockerungsvorrichtung 19 und das Glättbrett 16 an Schräglagen des befahrenen Feldes anpassen können.

Als Bodenlockerungsvorrichtung 19 kann eine Fräse eingesetzt werden. Das erfindungsgemäße Bodenbearbeitungsgerät kann auch zur Bearbeitung von Skipisten vorteilhaft eingesetzt werden, wobei die Fräse die Aufgabe hat, den Boden, z.B. Eisplatten, zu lockern und oberflächlich aufzubereiten, wonach dann eine Einebnung mittels des Glättbrettes erfolgt und dadurch eine einwandfreie Pistenoberfläche hergestellt werden kann. In diesem Fall ist das Zugfahrzeug vorzugsweise als Raupenfahrzeug ausgebildet.

Die Bodenlockerungsvorrichtung 19 ist über ein Schwenklager 14 mit dem Glättbrett 16 verbunden, wobei die Bodenlockerungsvorrichtung 19 um das Lager 14 hochgeschwenkt werden kann und solcherart aus einer wirksamen (Arbeitsstellung) in eine unwirksame Stellung (Ruhestellung) gelangt. In der Ruhestellung liegt die Bodenlockerungsvorrichtung 19 im Abstand vom Boden.

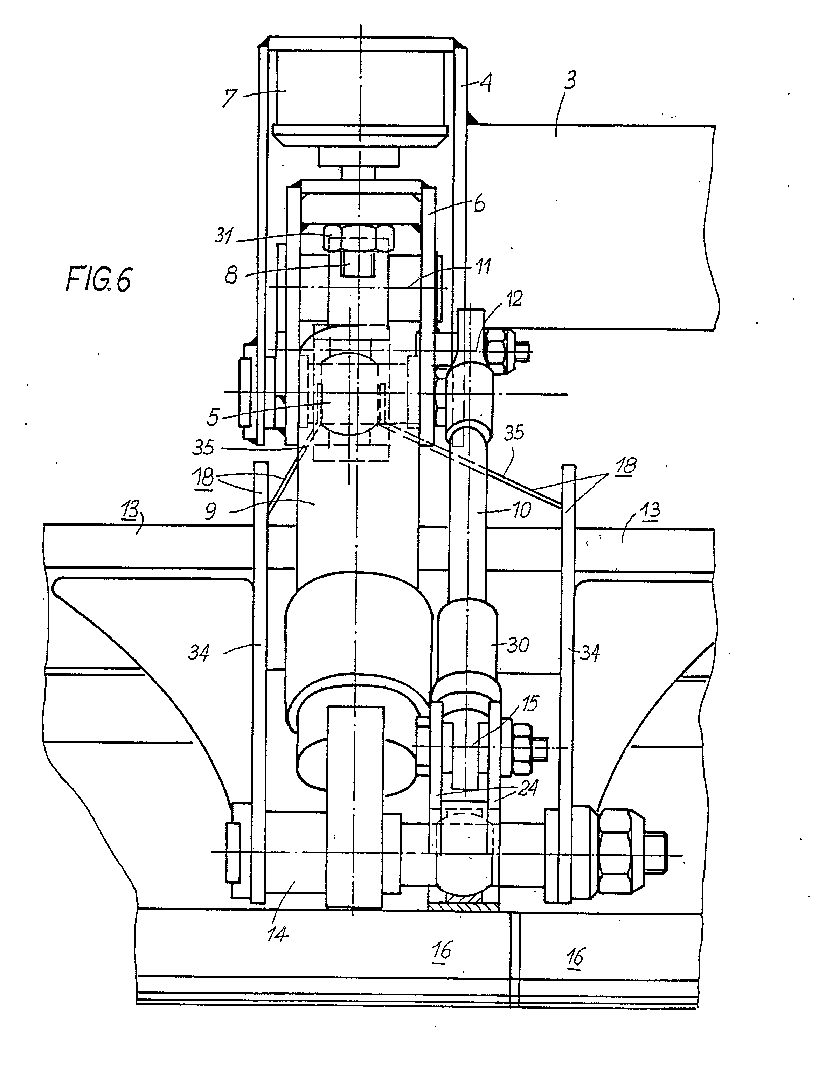

Sowohl die bevorzugt als Fräse ausgebildete Bodenbearbeitungsvorrichtung 19 als auch das Glättbrett 16 sind etwa mittig unterteilt. Die durch die Unterteilung gebildeten beiden Abschnitte der Bodenlockerungsvorrichtung 19 und des Glättbrettes 16 sind mittels eines Gelenks 25 bzw. eines Gelenks 39 miteinander verbunden. Das Gelenk 25, welches die Abschnitte der Bodenlockerungsvorrichtung verbindet, ist vorzugsweise als Kugelgelenk ausgebildet. Soll das Drehmoment über das Gelenk 25 übertragen werden, so ist dieses als Wellengelenk ausgebildet. Das die beiden Abschnitte des Glättbrettes 16 verbindende Gelenk 39 ist als Scharniergelenk ausgebildet, dessen Achse 40 in der Mittenlängsebene 41 des Bodenbearbeitungsgerätes liegt. Die beiden Abschnitte des Glättbrettes können durch eine die Achse 40 überbrückende Blattfeder 42 auf Druck belastet werden. Zur Axialführung der Welle der Bodenlockerungsvorrichtung 19 ist das Gelenk 25, welches zwischen den beiden Abschnitten der Bodenlockerungsvorrichtung angeordnet ist, über Federn 26 an einem Balken 13 abgestützt, der quer zur Fahrtrichtung des Bodenbearbeitungsgerätes verläuft. Der Balken 13 ist nach Art eines Gerberträgers ausgebildet. Das Gerbergelenk 27 ist dabei ungefähr mittig angeordnet. Jeder Balkenabschnitt ist ungefähr in seiner Mitte über eine als Kugelgelenk ausgebildete Pendellagerung 5, wie sie etwa aus Fig.6 ersichtlich ist, an dem Haltebalken 3 angelenkt. Jeder Abschnitt des Balkens 13 trägt an seinem äußeren, freien Ende ein Antriebsaggregat 37 für die umlaufende Bodenlockerungsvorrichtung 19. Das Antriebsaggregat 37 ist dabei in Längsrichtung des Balkens 13 verschiebbar mit diesem Balken verbunden, die Welle der Bodenlockerungsvorrichtung 19 drehschlüssig, jedoch axial unverschieblich, mit dem Antriebsaggregat 37 gekuppelt. Das Gehäuse des Antriebsaggregates 37 besitzt eine als Kufe 20 ausgebildete Außenfläche, sodaß die Abschnitte des Balkens 13 mit den Wellen der Abschnitte der Bodenlockerungsvorrichtung über die Kufen 20 in Verbindung stehen. Die Federn 26 sind als gekrümmte Blattfedern ausgebildet und ausgehend vom Gelenk 25 symmetrisch zur Längsmittenebene des Bodenbearbeitungsgerätes angeordnet. Jeder Abschnitt des Glättbrettes 16 ist im Abstand von dem Scharniergelenk 39 an einem Abschnitt des Balkens 13 durch eine Pendellagerung angelenkt, wie dies Fig.6 erkennen läßt.

Durch die vorstehend beschriebene Anordnung der Federn 26 wird eine axiale Führung der Abschnitte der Wellen der Bodenlockerungsvorrichtung gegenüber dem Balken 13 sichergestellt. Zur Erläuterung sei darauf hingewiesen, daß die beiden Federn 26 ihre Aufgabe, eine Axialverschiebung der Wellen der Bodenlockerungsvorrichtung zu verhindern, wie folgt erfüllen:

Die Augen 43 der Blattfedern 26 sind auf Zapfen 44 der Abschnitte des Balkens 13 gelagert und mit ihrer konvexen Seite über dem Gelenk 25 miteinander verbunden. In Fig.5 ist hiebei lediglich die Bohrung 45 eingezeichnet, durch welche die Verbindungsschraube gesteckt wird. Eine der Blattfedern ist zum Gelenk 25 hin verlängert und mit diesem fest verbunden, bevorzugt verschweißt.

Die Zapfen 44 sind parallel zum Gelenk 27, das die beiden Abschnitte des Balkens 13 miteinander verbindet. Bewegen sich nun die Abschnitte des Balkens 13 im Gelenk 27 gegeneinander, so behalten die Federn 26 bezüglich der Abschnitte der Balken eine Position, die der Winkelsymmetrale zwischen den Abschnitten des Balkens entspricht. Die geringfügigen Abstandsänderungen zwischen den Zapfen 44, welche sich bei einer Bewegung der Abschnitte des Balkens 13 ergeben, werden durch die Blattfedern 26 ausgeglichen, womit die axiale Führung der Wellenabschnitte der Bodenlockerungsvorrichtung über die Blattfedern 26 und das Gelenk 25 sichergestellt ist.

Die Bodenlockerungsvorrichtung 19 ist mit einer Kurbel 18 eines Gelenksvierecks fest verbunden. Die Kurbel 18 wird hiebei von zwei Rippen 34 und je einem von jeweils einer Rippe ausgehenden Verbindungsblech 35 gebildet, die mit einem als Kugelegelenklager ausgebildeten Hauptlager 5 verbunden sind (Fig.6). Die Rippe 34 ist hiebei an einem als Kastenträger ausgebildeten Balken 13 befestigt, der sich mit seiner Längsachse parallel zur Drehachse der Bodenlockerungsvorrichtung 19 erstreckt und der mit seiner Unterseite eine Schutzhaube 23 für die umlaufende Bodenlockerungsvorrichtung 19 bildet.

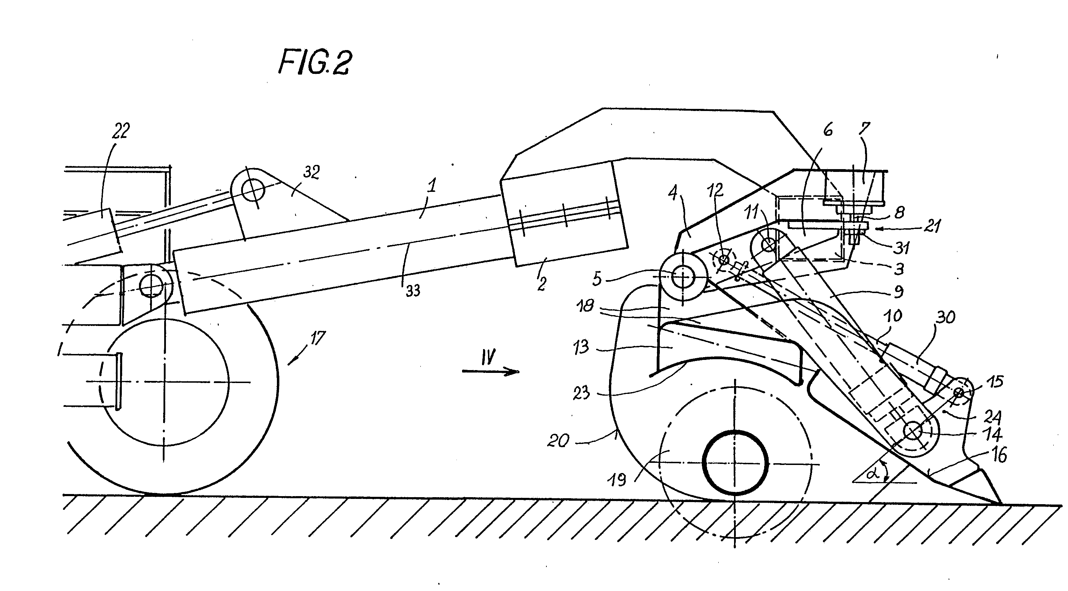

Diese Schutzhaube 23 deckt die Bodenlockerungsvorrichtung über ihre Länge ab und setzt in der Betriebsstellung des Gerätes (Fig.2) in dem Glättbrett 16 fort. Die gesamte umfängliche Abdeckung der Bodenlockerungsvorrichtung 19 ist damit unterteilt, wobei ein Teil dieser Abdeckung vom Glättbrett 16 gebildet ist, das relativ zur Schutzhaube 23 bewegbar ist. Das erwähnte Hauptlager 5 der Kurbel 18 ist mit dem Haltebalken 3, der ebenfalls als bevorzugt quadratischen Querschnitt aufweisendes Kastenprofil ausgebildet ist, fest verbunden. Hiebei trägt der Haltebalken 3 an seinen beiden seitlichen Enden eine taschenförmige Konsole 4, die von einem das Hauptlager 5 aufweisenden Zapfen durchsetzt wird (Fig.6). Die Koppel 24 des Gelenksvierecks ist mit dem Glättbrett 16 fest verbunden, sodaß das Glättbrett bei Bewegung des Gelenkvierecks eine Koppelbewegung ausführt. Das Hauptlager 12 der zweiten Kurbel des Gelenksvierecks, die am Glättbrett 16 angreift, steht ebenfalls mit dem Haltebalken 3 in Verbindung. Diese Verbindung ist bevorzugt justierbar. Zum Zwecke dieser Justierung ist das Hauptlager 12 der Kurbel 10 an einem um die Lagerachse des Hauptlagers 5 der anderen Kurbel 18 des Gelenksvierecks schwenkbaren Hebel 6 befestigt. Der Hebel 6 ist dabei U-förmig ausgebildet, wobei die U-Schenkel um den Zápfen des Hauptlagers 5 schwenkbar sind. Der Hebel 6 kann nach Ausführung einer Justierbewegung mittels einer als Ganzes mit 21 bezeichneten Feststellvorrichtung fixiert werden.

Durch Schwenken des Hebels 6 kann das Gestell gegenüber dem Haltebalken 3 justiert werden. Das Gelenksviereck ist so dimensioniert und im Bodenbearbeitungsgerät angeordnet, daß innerhalb des Schwenkbereiches des Gelenksvierecks zwischen der Arbeits-und Ruhestellung des Bodenbearbeitungsgerätes die Lage der Koppel 24 des Gelenksvierecks annähernd unverändert bleibt. Lageabweichungen im Bereich von ±5° gegenüber der Sollage können toleriert werden.

Der Längenunterschied zwichen den beiden Kurbeln 18 und 10 des Gelenksvierecks beträgt höchstens 30% der Länge der längeren Kurbel 18, die mit der Bodenlockerungsvorrichtung 19 fest verbunden ist. Die Gestellänge des Gelenksvierecks, d.i. der Abstand der Kurbelhauptlager 5,12 ist größer als die Länge der Koppel 24, d.i. der Abstand der Kurbelschwenklager 14, 15 am Glättbrett. Das Lager 14 ist dabei bevorzugt als Kugelgelenk ausgebildet, sodaß das Glättbrett 16 pendelnd gehalten wird. In der Arbeitsstellung schließt die Koppel 24 mit einer Bodenparallelen einen Winkel α ein, der bevorzugt 60° beträgt, allgemein jedoch in einem Bereich zwischen 45° und 90° liegen kann.

Die Länge der längeren Kurbel 18, d.i. jene, die mit der Bodenlockerungsvorrichtung 19 fest verbunden ist, beträgt ungefähr das 5 bis 6fache der Länge der Koppel 24 des Gelenksvierecks. Die Länge der zweiten Kurbel 10 kann durch ein Stellglied verändert werden. Durch Verändern der Länge der Kurbel 10 kann dabei die Eindringtiefe der Bodenlockerungsvorrichtung 19 in den Boden fein justiert werden. Als Stellglied eignet sich vor allem ein Hydraulikzylinder 30, jedoch kann auch ein Schraubgetriebe oder ein Spannschloß mit Links/Rechtsgewinde zur Längenänderung vorgesehen werden. Bei Anordnung eines Hydraulikzylinders 30 ist jedoch die Einjustierung der Eindringtiefe der Fräse in einfacher Weise vom Fahrerstand aus steuerbar.

Die Feststellvorrichtung für den Hebel 6, der das Gestell des Gelenksvierecks trägt, weist eine Schraubspindel 8 auf, die den Hebel 6 durchsetzt, wobei auf diese Schraubspindel eine Schraubmutter 31 aufschraubbar ist, die sich am Hebel 6 abstützt. Die Schraubspindel 8 ihrerseits ist an einer Platte befestigt, die an einem Gummipuffer 7 zur Anlage kommen kann, der am Haltebalken 3, d.h. an der taschenförmigen Konsole 4, fixiert ist.

Zum Antrieb der Bodenlockerungsvorrichtung 19 können Hydraulikmotoren 36 (Fig.1) vorgesehen werden, die über ein Antriebsaggregat 37 die Welle der Bodenlockerungsvorrichtung 19 an ihren beiden Enden antreibt. Das Gehäuse des Antriebsaggregates 37 ist mit einer Kufe 20 fest verbunden, die sich am Boden abstützt und seitlich die Bodenlockerungsvorrichtung 19 führt. Das Gehäuse des Antriebsaggregates 37 ist über Lagerzapfen 38 mit dem Balken 13 verbunden.

Die beiden Hydraulikmotoren 36 sind parallel geschaltet.

Zum Verstellen des Gelenksvierecks dient ein Stellzylinder 9, der über seinen Kolben am Schwenklager 14 der Kurbel 18 und mit seinem Zylinder über ein Gelenk 11 am Hebel 6, der das Gestell des Gelenksvierecks trägt, abgestützt ist.

Die Kinematik ist bei dem erfindungsgemäßen Bodenbearbeitungsgerät so ausgelegt, daß bei Ausfahren des Stellzylinders 9 und Einfahren des Kolben/Zylinderaggregates 22, das die Verbindung zum Zugfahrzeug 17 herstellt, die Bodenlockerungsvorrichtung 19 mit dem Kastenträger 13 in Richtung zum Zugfahrzeug 17, das auch als Kettenfahrzeug ausgebildet sein kann, - schwenkt und sich über das Kurbelschwenklager 14 als Stützgelenk vom Boden abhebt, während das Glättbrett 16 im wesentlichen seine Lage beibehält.

## Ansprüche

1. Bodenbearbeitungsgerät, mit einer um eine im wesentlichen horizontale Achse umlaufenden Bodenlockerungsvorrichtung, z. B. Fräse, und mit einem Glättbrett, dadurch gekennzeichnet, daß sowohl die umlaufende Bodenlockerungsvorrichtung (19) als auch das Glättbrett (16) ungefähr mittig unterteilt sind, und daß die beiden Abschnitte der Bodenlockerungsvorrichtung (19) mittels eines Gelenkes - (25), vorzugsweise eines Kugelgelenkes, miteinander verbunden sind und daß auch die Abschnitte des Glättbrettes - (16) mittels eines Gelenkes, das bevorzugt als Scharniergelenk (39) mit in der Mittenlängsebene (41) gelegener Achse (40) ausgebildet ist, miteinander in Verbindung stehen.

2. Bodenbearbeitungsgerät nach Anspruch 1, dadurch gekennzeichnet, daß zur Achsialführung der Welle der Bodenlockerungsvorrichtung (19) das die beiden Abschnitte der Bodenlockerungsvorrichtung (19) verbindende Gelenk (25) über Federn (26) an einem quer zur Fahrtrichtung des Bodenbearbeitungsgerätes angeordneten Balken (13) abgestützt ist (Fig. 4, 5).

3. Bodenbearbeitungsgerät nach Anspruch 2, dadurch gekennzeichnet, daß der Balken (13) nach Art eines Gerberträgers mit ungefähr mittig angeordnetem Gelenk (27) ausgebildet ist, und daß jeder Balkenabschnitt, bevorzugt mittig, über eine bevorzugt als Kugelgelenk ausgebildete Pendellagerung (5) an einem quer zur Fahrtrichtung des Gerätes angeordneten Haltebalken (3) angelenkt ist (Fig. 4).

4. Bodenbearbeitungsgerät nach Anspruch 2 oder 3, dadurch gekennzeichnet, daß der Balken (13) an jedem seiner freien Enden ein Antriebsaggregat (Getriebe) für die umlaufende Bodenlockerungsvorrichtung (19) trägt, wobei gegebenenfalls das Antriebsaggregat (Getriebe) (37) in Längsrichtung des Balkens (13) verschiebbar mit dem Balken (13) verbunden ist und die Welle der Bodenlockerungsvorrichtung (19) drehschlüssig, jedoch fest (axial unverschieblich) mit dem Antriebsaggregat (37) in Verbindung steht.

5. Bodenbearbeitungsgerät nach einem der Ansprüche 2 oder 3, dadurch gekennzeichnet, daß die Federn (26), welche das die beiden Abschnitte der Bodenlockerungsvorrichtung (19) verbindende Gelenk (25) mit dem Balken - (13) verbinden, als gekrümmte Blattfedern ausgebildet sind, die ausgehend vom Gelenk (25) symmetrisch zur Längsmittenebene des Bodenlockerungsgerätes angeordnet sind (Fig. 4, 5).

6. Bodenbearbeitungsgerät nach Anspruch 1 und 3, dadurch gekennzeichnet, daß jeder Abschnitt des Glättbrettes (16) im Abstand von dem die Glättbrettabschnitte verbindenden Gelenk (39), bevorzugt in der Mitte des jeweiligen Glättbrettabschnittes, an einem Abschnitt des Balkens (13) pendelnd (Fig. 6) angelenkt ist.

*FIG.1*

*FIG.4*

0 194 991

FIG.2

FIG. 3

0 194 991

FIG.5

FIG. 6

0 194 991